(19) **Europäisches Patentamt / European Patent Office / Office européen des brevets**

(11) **EP 1 386 480 B1**

(12) **FASCICULE DE BREVET EUROPEEN**

(45) Date de publication et mention de la délivrance du brevet:
**20.07.2011 Bulletin 2011/29**

(21) Numéro de dépôt: **02738233.2**

(22) Date de dépôt: **10.05.2002**

(51) Int Cl.:
*H04N 5/225* *(2006.01)*   *G02B 13/06* *(2006.01)*

(86) Numéro de dépôt international:
**PCT/FR2002/001588**

(87) Numéro de publication internationale:
**WO 2002/093908 (21.11.2002 Gazette 2002/47)**

(54) **PROCEDE DE CAPTURE ET D'AFFICHAGE D'UNE IMAGE PANORAMIQUE NUMERIQUE A RESOLUTION VARIABLE**

VERFAHREN ZUR AUFNAHME UND ANZEIGE EINES DIGITALEN PANORAMABILDES MIT VARIABLER AUFLÖSUNG

METHOD FOR CAPTURING AND DISPLAYING A VARIABLE-RESOLUTION DIGITAL PANORAMIC IMAGE

(84) Etats contractants désignés:
**AT BE CH CY DE DK ES FI FR GB GR IE IT LI LU MC NL PT SE TR**

(30) Priorité: **11.05.2001 FR 0106261**

(43) Date de publication de la demande:
**04.02.2004 Bulletin 2004/06**

(73) Titulaire: **6115187 Canada Inc.**
**Saint-Laurent,**
**Quebec H4M 2P1 (CA)**

(72) Inventeurs:
• **ARTONNE, Jean-Claude**
**H2H 1R1 Montreal**
**Quebec (CA)**

• **MOUSTIER, Christophe**
**F-13012 Marseille (FR)**
• **BLANC, Benjamin**
**H4A 3H3 Montreal**
**Quebec (CA)**

(74) Mandataire: **Marchand, André**
**OMNIPAT**
**24 Place des Martyrs de la Résistance**
**13100 Aix-en-Provence (FR)**

(56) Documents cités:
| | |
|---|---|
| EP-A- 0 695 085 | EP-A- 1 004 915 |
| WO-A-00/42470 | US-A- 3 953 111 |
| US-A- 5 880 896 | US-A- 6 031 670 |

**Description**

La présente invention concerne l'obtention d'images panoramiques numériques et l'affichage d'images panoramiques sur des écrans d'ordinateurs.

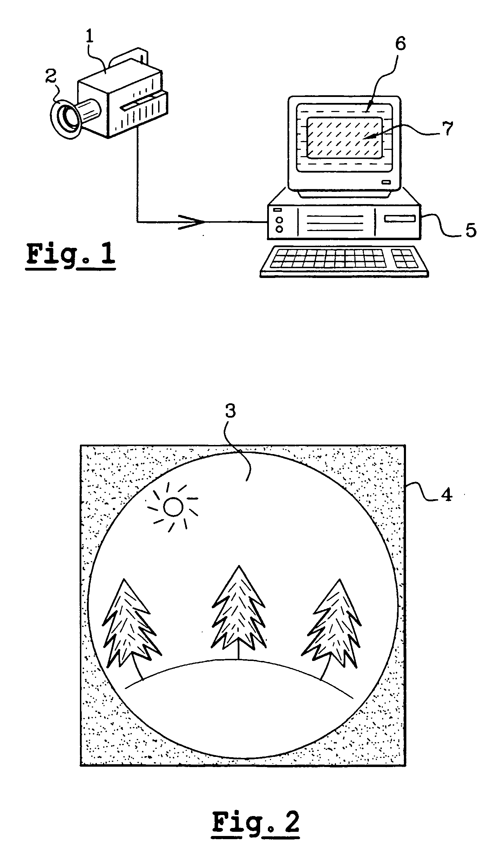

La figure 1 représente un dispositif classique permettant de réaliser une image panoramique numérique et de
la présenter sur un écran d'ordinateur. Le dispositif comprend un appareil de prise de vue numérique 1 équipé d'un
objectif panoramique 2 de type "fish-eye", ayant un angle d'ouverture de l'ordre de 180°. L'appareil 1 est connecté à un
calculateur 5, par exemple un micro-ordinateur, pourvu d'un écran 6. La connexion au micro-ordinateur 5 peut être
permanente, par exemple lorsque l'appareil 1 est une caméra vidéo numérique, ou temporaire, par exemple lorsque
l'appareil 1 est un appareil photographique numérique pourvu d'une mémoire d'images, la connexion étant alors faite
au moment où des fichiers image doivent être transférés dans le micro-ordinateur.

La figure 2 représente schématiquement l'aspect d'une image panoramique 3 obtenue au moyen de l'objectif
panoramique 2. L'aspect rond de l'image est caractéristique de la symétrie axiale des objectifs panoramiques et l'image
présente des bords sombres 4 qui seront supprimés ultérieurement. Cette image panoramique numérique est délivrée
par l'appareil 1 sous forme d'un fichier informatique contenant des points image codés RVBA agencés dans une table
à deux dimensions, "R" étant le pixel rouge d'un point image, "V" le pixel vert, "B" le pixel bleu, et "A" le paramètre Alpha
ou transparence, les paramètres R, V, B, A étant généralement codés sous 8 bits.

Le fichier image est transféré dans le micro-ordinateur 5 qui transforme l'image initiale en une image numérique
à trois dimensions, puis présente à l'utilisateur un secteur de l'image à trois dimensions dans une fenêtre d'affichage 7
occupant tout ou partie de l'écran 6.

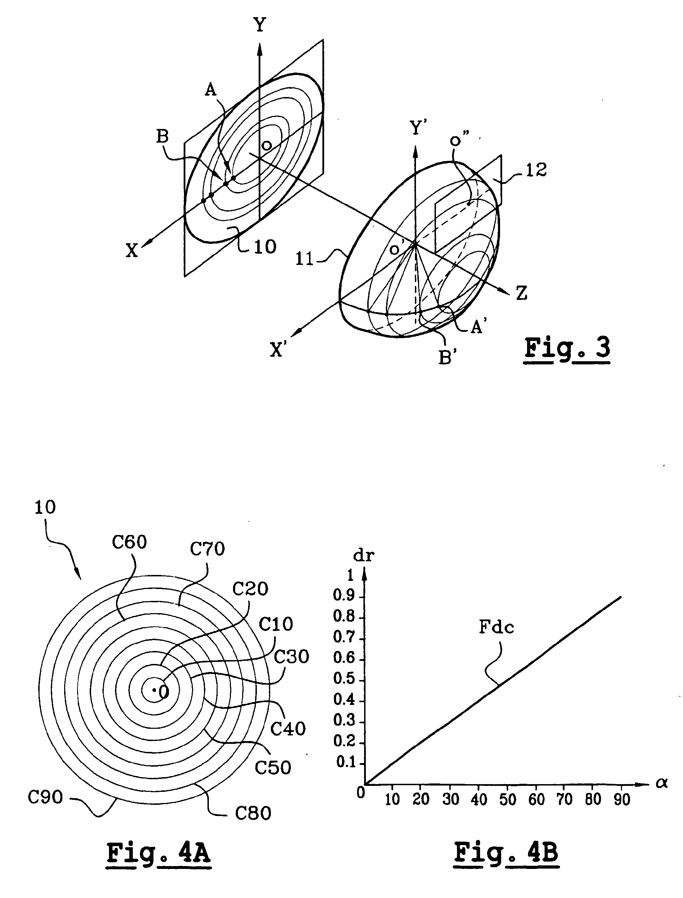

La figure 3 illustre schématiquement des étapes classiques de transformation de l'image panoramique à deux
dimensions en une image panoramique offrant un effet de perspective réaliste. Après suppression des bords noirs de
l'image, le micro-ordinateur dispose d'un ensemble de points image formant un disque image 10 de centre O et d'axes
OX et OY. Les points image du disque image sont transférés dans un espace à trois dimensions défini par un repère
orthogonal d'axes O'X'Y'Z, l'axe O'Z étant perpendiculaire au plan du disque image. Le transfert est assuré par une
fonction mathématique mise en oeuvre par un algorithme exécuté par le micro-ordinateur, et conduit à l'obtention d'un
ensemble de points image référencés dans le repère O'X'Y'Z. Ces points image sont par exemple codés en coordonnées
sphériques RVBA (φ,θ), φ étant la latitude et θ la longitude d'un point image, les angles φ et θ étant codés sur 4 à 8
octets (norme IEEE). Ces points image forment une demi-sphère 11 lorsque l'objectif panoramique utilisé présente une
ouverture de 180°, sinon une portion de demi-sphère. Le micro-ordinateur dispose ainsi d'une image virtuelle en forme
de demi-sphère dont un secteur 12, correspondant à la fenêtre d'affichage 7, est présenté sur l'écran (fig. 1) en considérant
que l'observateur se trouve sur le point central O' du système d'axes O'X'Y'Z, qui définit avec le centre O" du secteur
d'image 12, une direction O'O" appelée "position du regard".

Afin d'éviter que le secteur d'image affiché 12 présente des déformations géométriques désagréables pour
l'observateur, les objectifs panoramiques classiques doivent présenter une fonction de répartition des points image en
fonction de l'angle de champ des points objet d'un panorama qui soit la plus linéaire possible. Ainsi, si l'on considère
deux points A', B' situés sur un même méridien de la demi-sphère 11, et les points correspondants A, B sur le disque
image 10, le rapport entre les angles (A'O'Z) et (B'O'Z) doit être égal au rapport entre les distances OA et OB sur le
disque image.

En raison de cette propriété de linéarité d'un objectif panoramique classique, des points image correspondant
à des points objet ayant un angle de champ identique forment sur le disque image 10 des cercles concentriques C10,
C20... C90, comme cela est représenté en figure 4A. On désigne classiquement par "angle de champ d'un point objet"
l'angle que présente un rayon lumineux incident passant par le point objet considéré et par le centre du panorama
photographié, relativement à l'axe optique de l'objectif. L'angle de champ d'un point objet peut être compris entre 0 et
90° pour un objectif ayant une ouverture de 180°. Ainsi, le cercle C10 est formé par les points image correspondant à
des points objet ayant un angle de champ de 10°, le cercle C20 est formé par des points image correspondant à des
points objet ayant un angle de champ de 20°, etc., le cercle C90 étant formé par les points image ayant un angle de
champ de 90°.

La figure 4B représente l'allure de la fonction de répartition Fdc d'un objectif panoramique classique, qui
détermine la distance relative *dr* d'un point image par rapport au centre du disque image en fonction de l'angle de champ
α du point objet correspondant. La distance relative *dr* est comprise entre 0 et 1 et est égale à la distance du point image
par rapport au centre de l'image divisée par le rayon du disque image. La forme idéale de la fonction Fdc est une droite
de pente K :

$$dr = \text{Fdc}\ (\alpha) = K\ \alpha$$

dans laquelle la constante K est égale à 0,111 degré$^{-1}$ (1/90°).

Cette technique d'affichage sur un écran d'ordinateur d'un secteur d'image numérique panoramique présente divers avantages, notamment la possibilité "d'explorer" l'image panoramique en faisant glisser le secteur d'image présenté à l'écran vers la gauche, la droite, le haut ou le bas, jusqu'à atteindre les limites de l'image panoramique. Cette technique permet également d'effectuer des rotations complètes de l'image lorsque deux images numériques complémentaires ont été prises et fournies au micro-ordinateur, ce dernier reconstituant alors une sphère panoramique complète par assemblage de deux demi-sphères. Un autre avantage offert par la présentation d'une image panoramique sur écran est de permettre à l'observateur d'effectuer des grossissements ou zooms sur des parties de l'image. Les zooms sont effectués de façon numérique, par rétrécissement du secteur d'image affiché et dilatation de la répartition des points image sur les pixels de l'écran.

Divers exemples d'images panoramiques interactives peuvent être trouvés sur le Web. On pourra notamment se reporter au site central "http://www.panoguide.com" ("the guide to panoramas and panoramic photography") qui donne un aperçu exhaustif de l'ensemble des produits à la disposition du public pour réaliser de telles images. Des logiciels permettant de transformer des photographies panoramiques numériques en images panoramiques interactives sont proposés au public sous forme de programmes téléchargeables ou de CD-ROM disponibles dans le commerce.

Malgré les divers avantages qu'offre cette technique d'affichage d'images numériques, les grossissements numériques présentent l'inconvénient d'être limités par la résolution du capteur d'image utilisé lors de la prise d'image initiale et la résolution d'un capteur d'image est généralement très inférieure à celle d'une photographie classique. Ainsi, lorsque le grossissement augmente, la granulosité de l'image apparaît car on arrive aux limites de la résolution du capteur d'image.

Pour pallier cet inconvénient, il est connu de procéder à des interpolations de pixels afin de retarder l'apparition des pavés de couleur qui trahissent les limites de la résolution du capteur. Toutefois, cette méthode ne fait qu'améliorer l'aspect du secteur d'image grossi et ne permet aucunement d'apporter un surcroît de définition. Une autre solution, évidente, est de prévoir un capteur d'image présentant une résolution élevée, supérieure à la résolution nécessaire pour la présentation d'un secteur d'image sans grossissement, de sorte qu'il reste une marge de définition pour les zooms. Cette solution est toutefois coûteuse car le prix de revient d'un capteur d'image augmente rapidement avec le nombre de pixel par unité de surface.

Afin d'améliorer la qualité des grossissements, certaines tentatives ont été faites en modifiant les propriétés optiques des objectifs panoramiques eux-mêmes. Ainsi, le brevet US 5710661 enseigne de capturer une image panoramique avec deux objectifs imbriqués grâce à un jeu de miroirs. Un premier jeu de miroir permet d'offrir une vue d'ensemble, et un miroir central mobile permet d'offrir une vue en détail sur une zone déterminée du panoramique. Toutefois cette solution n'offre pas la même souplesse que les zooms numériques, notamment lorsque l'image n'est pas affichée en temps réel, l'observateur n'ayant plus la possibilité de choisir la portion d'image qu'il veut agrandir une fois la photographie réalisée.

Ainsi, la présente invention vise un procédé permettant de contourner les limites physiques des capteurs d'image et d'améliorer la définition offerte par des grossissements numériques portant sur certaines parties d'une image panoramique numérique, sans qu'il soit nécessaire d'augmenter le nombre de pixels par unité de surface d'un capteur d'image ni de prévoir un système de grossissement optique imbriqué dans un objectif panoramique.

Dans de nombreuses applications, seules certaines zones d'une image panoramique présentent un intérêt pratique et sont susceptibles d'être dilatées par l'observateur au moyen d'un zoom numérique. Ainsi, dans des applications comme la vidéosurveillance, la vidéoconférence, la visioconférence, une caméra panoramique peut être installée contre un mur ou au plafond et l'on n'a généralement aucun intérêt à faire des grossissements sur les zones de l'image panoramique correspondant au mur ou au plafond. De même, dans le cadre d'une vidéoconférence faite au moyen d'une caméra panoramique, la zone la plus intéressante est généralement située à un endroit spécifique qui est situé vers le centre de l'image (dans le cas d'une utilisation individuelle) ou sur les bords de l'image (dans le cas d'une utilisation collective ou visioconférence). Par ailleurs, dans le domaine des loisirs, la plupart des images panoramiques comprennent des parties moins intéressantes que d'autres, par exemple les parties représentant le ciel ou un plafond, la partie la plus utile se trouvant généralement au voisinage du centre de l'image.

Le brevet EP 0 695 085 décrit un procédé de capture d'images utilisant une lentille hémisphérique à gradient d'index (52, fig. 4A) qui dilate les bords de l'image.

Le brevet US 3 953 111 décrit un procédé de capture d'images au moyen d'un vidicon utilisant une lentille qui dilate le centre de l'image et un projecteur utilisant une lentille inverse pour projeter l'image corrigée sur un écran sphérique.

La présente invention propose de réaliser des photographies panoramiques au moyen d'un objectif panoramique qui n'est pas linéaire et qui dilate une zone intermédiaire de l'image se trouvant entre le centre et les bords de l'image. La zone dilatée de l'image couvrent un nombre de pixels du capteur d'image plus important que si elle n'était pas dilatée, et bénéficie par conséquent d'une meilleure définition.

Plus particulièrement, la présente invention propose un procédé de capture d'une image panoramique numérique conforme à la revendication 1.

La présente invention concerne également un procédé d'affichage d'une image panoramique conforme à la revendication 7.

La présente invention concerne également un objectif panoramique conforme à la revendication 14.

Ces objets, caractéristiques et avantages ainsi que d'autres de la présente invention seront exposés plus en détail dans la description suivante du procédé selon l'invention et d'exemples de réalisation d'objectifs panoramiques non linéaires selon l'invention, faite à titre non limitatif en relation avec les figures jointes parmi lesquelles :

- la figure 1 précédemment décrite représente un système d'affichage sur un écran d'une image panoramique numérique,
- la figure 2 précédemment décrite représente une image panoramique avant son traitement par un ordinateur,
- la figure 3 précédemment décrite illustre un procédé classique de transformation d'une image panoramique à deux dimensions en une image panoramique numérique à trois dimensions,
- les figures 4A et 4B précédemment décrites illustrent la linéarité d'un objectif panoramique classique,
- les figures 5 et 6 illustrent un aspect du procédé et représentent respectivement une répartition de points image obtenue avec un objectif panoramique classique et une répartition de points image obtenue avec un objectif panoramique non linéaire selon l'invention,
- les figures 7A et 7B illustrent un premier exemple de non-linéarité d'un objectif panoramique,
- la figure 8 illustre un second exemple de non-linéarité d'un objectif panoramique,
- la figure 9 illustre un troisième exemple de non-linéarité d'un objectif panoramique selon l'invention,
- la figure 10 représente un système d'affichage d'une image panoramique numérique au moyen duquel est mis en oeuvre un procédé de correction selon l'invention de l'image panoramique,
- la figure 11 illustre schématiquement un premier mode de réalisation du procédé de correction selon l'invention,
- la figure 12 est un organigramme décrivant un procédé d'affichage d'une image panoramique incorporant le premier procédé de correction selon l'invention,
- la figure 13 illustre schématiquement un second mode de réalisation du procédé de correction selon l'invention,
- la figure 14 est un organigramme décrivant un procédé d'affichage d'une image panoramique incorporant le second procédé de correction selon l'invention,
- la figure 15 est une vue en coupe d'un premier mode de réalisation d'un objectif panoramique non linéaire selon l'invention,
- la figure 16 est une vue éclatée en coupe d'un système de lentilles présent dans l'objectif panoramique de la figure 15,
- la figure 17 est une vue de profil d'une lentille présente dans l'objectif panoramique de la figure 15, et
- la figure 18 est le schéma d'un second mode de réalisation d'un objectif panoramique non linéaire selon l'invention.

**I - Description du procédé**

**A - Compression/dilatation d'une image initiale**

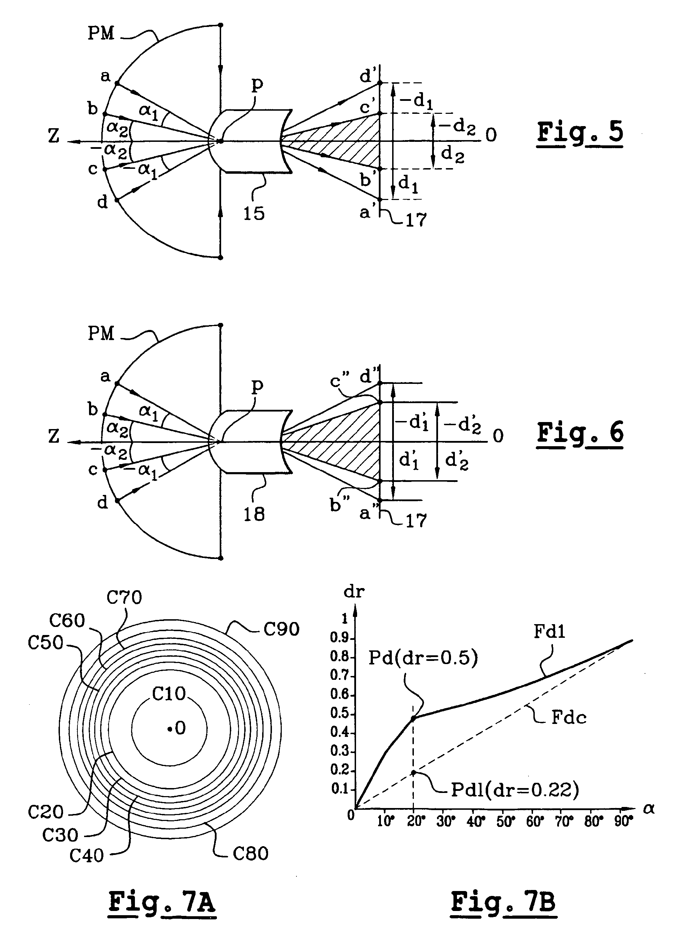

La figure 5 représente schématiquement un système classique de prise de vues panoramiques, comprenant un objectif panoramique 15 d'axe optique OZ et un capteur d'image numérique 17 agencé dans le plan image de l'objectif 15. On considère ici quatre points objet a, b, c, d appartenant à un panorama PM se trouvant en face de l'objectif et présentant respectivement des angles d'incidence $\alpha1$, $\alpha2$, $-\alpha2$, $-\alpha1$. Comme cela a été indiqué au préambule, l'angle de champ d'un point objet est l'angle que présente relativement à l'axe optique OZ de l'objectif un rayon lumineux incident passant par le point objet considéré et par le centre du panorama PM, repéré par un point "p" sur la figure. Dans cet exemple, l'angle $\alpha1$ est égal à deux fois l'angle $\alpha2$. Sur le capteur d'image 17, des points image a', b', c', d' correspondant aux points objet a, b, c, d se trouvent à des distances du centre de l'image égales respectivement à d1, d2, -d2, -d1. Comme la répartition des points image en fonction de l'angle de champ des points objet est linéaire avec un objectif panoramique classique, les distances d1 et d2 sont liées par la relation suivante :

$$d1/\alpha1 = d2/\alpha2$$

L'angle $\alpha1$ étant ici égal à $2\alpha2$, il vient que :

$$d1 = 2d2$$

Comme cela est bien connu de l'homme de l'art, le terme "linéarité" désigne ici un rapport de proportionnalité entre la distance d'un point image mesurée relativement au centre de l'image et l'angle de champ du point objet correspondant. La notion de "linéarité" en matière d'objectifs panoramiques est donc différente de celle qui prévaut dans le domaine de l'optique paraxiale (au voisinage de l'axe optique) lorsque les conditions de Gauss sont remplies.

La figure 6 représente un système de prise de vue du même type que le précédent, mais dans lequel l'objectif panoramique classique 15 est remplacé par un objectif 18, le capteur d'image 17 étant agencé dans le plan image de l'objectif 15. On considère à nouveau la projection sur le capteur d'image 17 des points objet a, b, c, d présentant des angles d'incidence $\alpha1$, $\alpha2$, -$\alpha2$ et -$\alpha1$ relativement à l'axe OZ de l'objectif et au centre "p" du panorama. Sur le capteur d'image 17, les points image correspondants a", b", c", d" se trouvent à des distances du centre de l'image respectivement égales à d1', d2', -d2', -d1'.

L'objectif 18 présente une fonction de répartition des points image qui n'est pas linéaire, le rapport des distances d1', d2', -d2', -d1' n'étant pas égal au rapport des angles d'incidence $\alpha1$, $\alpha2$, -$\alpha2$, -$\alpha1$. Sur l'exemple représenté, la distance d2' est nettement supérieure à d1'/2, de sorte que la partie centrale de l'image panoramique projetée sur le capteur d'image 17, qui correspond à un angle solide $2\alpha2$ centré sur l'axe optique OZ, occupe une surface plus importante sur le capteur d'image 17 que la surface qu'elle occupe en figure 5 avec l'objectif panoramique classique (zone hachurée). Cette partie centrale de l'image panoramique est ainsi projetée sur le capteur d'image avec dilatation de sa surface, par rapport à la surface qu'elle occuperait si l'objectif était linaire. Il en résulte que le nombre de pixel du capteur d'image couvert par cette partie de l'image est plus important que dans l'art antérieur et que la définition obtenue est améliorée. En contrepartie, la partie de l'image délimitée par deux cercles passant respectivement par les points a", d" et par les points b", c" est comprimée relativement à la partie correspondante en figure 5, et la définition sur les bords de l'image est inférieure à celle que l'on obtient avec un objectif linéaire classique, au bénéfice de la partie centrale de l'image.

En appliquant ce principe, qui consiste à dilater une partie de l'image et compresser une autre partie de l'image, on peut choisir la partie à dilater et la partie à compresser en fonction de l'application visée, en réalisant plusieurs types d'objectifs non linéaires et en choisissant un objectif convenant à l'application visée. Selon l'application visée, la partie la plus utile d'une image panoramique peut se trouver au centre de l'image, en bordure de l'image, dans une zone intermédiaire située entre le centre et le bord de l'image, etc.

Les figures 7A et 7B, 8 et 9 illustrent trois exemples de fonctions de répartition non linaires selon l'invention.

La fonction de répartition illustrée sur les figures 7A et 7B correspond à l'exemple de la figure 6, à savoir un objectif panoramique assurant une dilatation de l'image au centre. La figure 7A représente des cercles concentriques équidistants C10, C20... C90 présents sur un disque image, chaque cercle étant formé par des points image correspondant à des points objet ayant le même angle de champ. Le cercle C10 est formé par les points image correspondant à des points objet ayant un angle de champ de 10°, le cercle C20 est formé par des points image correspondant à des points objet ayant un angle de champ de 20°, etc.. En comparant la figure 7A avec la figure 4A décrite au préambule, il apparaît que les cercles C10 et C20 sont plus éloignés du centre de l'image et plus éloignés l'un de l'autre que les cercles C10 et C20 obtenus avec un objectif classique, tandis que les cercles C30 à C90 sont plus proches les uns des autres. Une telle image panoramique présente ainsi une zone dilatée au centre et une zone comprimée en bordure du disque image.

La figure 4B représente la courbe de la fonction de répartition Fd1 correspondante. La fonction de répartition linéaire classique, d'expression Fdc = K$\alpha$ et en forme de droite de pente K, est également représentée en tant que point de repère (la constante K étant égale à 1/90 pour un objectif ayant une ouverture de 180°, soit une pente de 0,111 par degré). L'angle de champ $\alpha$ des points objet est représenté en abscisse et est compris entre 0 et 90°. La distance relative *dr* d'un point image par rapport au centre du disque image est représentée sur l'axe des ordonnées et est comprise entre 0 et 1. La courbe de la fonction Fd1 présente une pente plus forte que la droite Fdc pour des angles $\alpha$ compris entre 0 et 20°, puis une pente plus faible au-delà des 20° et jusqu'à 90°. Une forte pente signifie une dilatation de l'image et une faible pente signifie une compression de l'image.

Il apparaît sur cet exemple que la courbe Fd1 présente un point de divergence maximale Pd à l'angle $\alpha$ = 20°. On entend par "point de divergence maximale" le point image Pd($\alpha$) où l'on observe le plus grand écart en distance relative *dr* par rapport à un point correspondant Pdl($\alpha$) sur la droite de répartition linaire K$\alpha$. Dans cet exemple, le point Pd($\alpha$=20°) présente une distance relative *dr* égale à 0,5 relativement au centre de l'image tandis que le point correspondant Pdl($\alpha$=20°) sur la courbe linaire Fdc présente une distance relative *dr* de 0,222. La divergence maximale DIVmax de la fonction de répartition Fd1 peut être calculée par une formule du type :

$$\texttt{DIVmax\% = [[} dr \texttt{(Pd) - } dr \texttt{(Pdl)]/[} dr \texttt{(Pdl)]]*100}$$

soit :

$$\texttt{DIVmax\% = [[} dr \texttt{(Pd) - K*}\alpha \texttt{(Pd)]/[K*}\alpha \texttt{(Pd)]]*100}$$

Dans laquelle $dr$(Pd) est la distance relative par rapport au centre du point de divergence maximale Pd, $dr$(Pdl) est la distance relative par rapport au centre du point correspondant sur la droite de répartition linéaire Fdc, $\alpha$(Pd) étant l'abscisse du point Pd soit l'angle de champ du point objet correspondant.

Dans l'exemple considéré ici, la divergence maximale est donc égale à +125%. Cette valeur de divergence maximale est nettement supérieure à celle due aux erreurs de conception éventuelles ou aux erreurs de fabrication d'un objectif panoramique classique, qui est de quelques pourcent. De façon générale, un objectif non linéaire présente une divergence maximale de l'ordre de 10% au moins, pour obtenir une dilatation des parties utiles de l'image qui se traduise par un net accroissement du nombre de pixels du capteur d'image couvert par les parties utiles et une amélioration sensible de la définition obtenue.

On définit également un taux moyen TX de dilatation ou compression d'une partie de l'image comprise entre deux cercles passant par des points Pd1 et Pd2. Le taux TX est le rapport entre la surface délimitée par les deux cercles passant par les points Pd1, Pd2 et la surface délimitée par deux cercles passant par des points Pdl1, Pdl2 de même abscisse appartenant à la fonction de répartition linéaire Fdc. Le taux TX peut être déterminé par une formule du type :

$$\texttt{TX = [} dr \texttt{(Pd1)}^2 \texttt{ - } dr \texttt{(Pd2)}^2 \texttt{ ]/ [(} dr \texttt{(Pdl1))}^2 \texttt{ - (} dr \texttt{(Pdl2))}^2 \texttt{]}$$

soit :

$$\texttt{TX = [} dr \texttt{(Pd1)}^2 \texttt{ - } dr \texttt{(Pd2)}^2 \texttt{ ]/ [K}^2 \texttt{[(}\alpha \texttt{(Pd1))}^2 \texttt{ - (}\alpha \texttt{(Pd2))}^2 \texttt{]]}$$

Un taux TX supérieur à 1 indique une dilatation de la partie d'image considérée tandis qu'un taux TX inférieur à 1 indique une compression de la partie d'image considérée. Dans l'exemple de fonction Fd1 considéré ici, le taux moyen de dilatation/compression TX de la partie centrale de l'image, délimitée par le cercle C20, est égal à 5,07, soit une dilatation moyenne par un facteur 5 de la partie centrale de l'image et par conséquent une amélioration de 500% de la définition obtenue pour un nombre de pixels constant du capteur d'image.

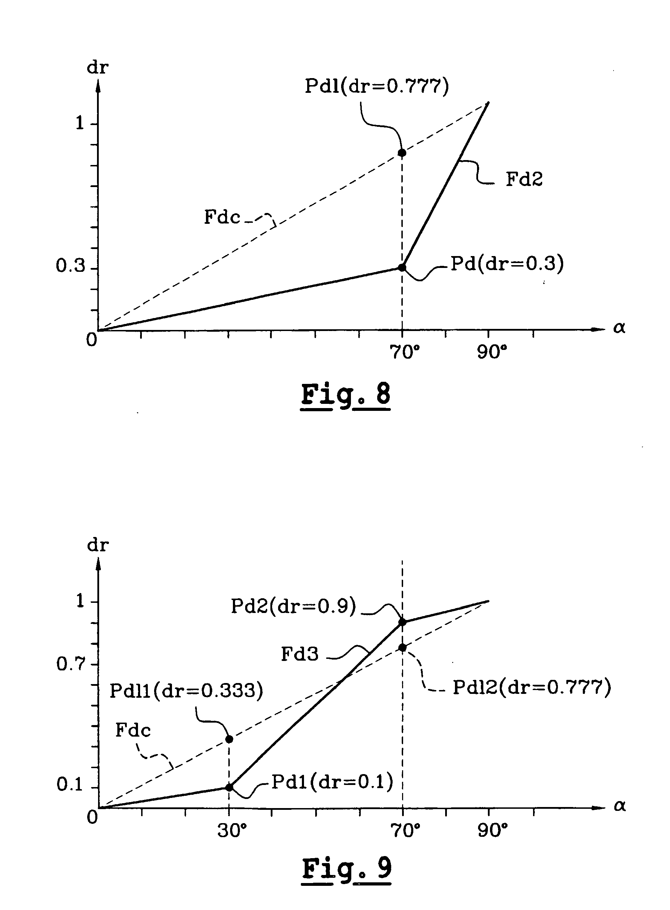

La figure 8 représente un autre exemple de fonction de répartition Fd2, présentant ici un point de divergence maximale Pd à l'angle $\alpha$=70°, ayant une distance relative par rapport au centre de l'image de 0,3. La divergence maximale de la courbe Fd2 est ici de -61,4 %, et le taux moyen de dilatation/compression TX de la partie centrale de l'image délimitée par le cercle C70 (non représenté) est de 0,15, soit une compression moyenne par un facteur de 0,15 de la partie centrale de l'image. La partie dilatée de l'image se trouve ainsi ici sur le bord de l'image, entre le cercle C70 et le cercle C90, et présente un taux moyen de dilatation/compression de 2,3. Ainsi, un disque image obtenu avec un objectif panoramique ayant une fonction de répartition conforme à la fonction Fd2, présente une zone à haute définition sur ses bords, se prêtant bien aux grossissements numériques, et une zone à faible définition dans sa partie centrale.

La figure 9 représente un troisième exemple de fonction de répartition Fd3 selon l'invention, présentant un premier point de divergence maximale Pd1 ($\alpha$=30°, $dr$=0,1) et un second point de divergence maximale Pd2 ($\alpha$=70°, $dr$=0,9). On observe donc deux divergences maximales, l'une négative et égale à -70%, l'autre positive et égale à 15,8%. On observe également une zone d'image comprimée entre le centre O de l'image et le cercle C30 passant par le point Pd1, une zone d'image dilatée entre le cercle C30 et le cercle C70 passant par le point Pd2, et une zone d'image comprimée entre le cercle C70 et le cercle C90 formant le bord du disque image. Les taux moyens de dilatation/compression TX(0, C30), TX(C30, C70), TX(C70, C90) pour chacune de ces zones sont respectivement égaux à 0,09, 1,6 et 0,48. Un disque image obtenu avec un objectif panoramique ayant une fonction de répartition conforme à la fonction Fd3, présente dans sa partie intermédiaire une zone à haute définition, se prêtant bien aux grossissements numériques, et deux zones à faible définition dans sa partie centrale et sur ses bords.

**B - Correction de la non-linéarité de l'image initiale**

On a décrit dans ce qui précède un premier aspect de l'invention, selon lequel on prévoit une répartition non linéaire de points image sur une image numérique afin d'améliorer la définition de l'image dans des zones dilatées, par augmentation du nombre de pixels du capteur d'image couvert par les zones dilatées. Avant de décrire des exemples de réalisation d'objectifs panoramiques non linéaires, on décrira un deuxième aspect de l'invention qui consiste à corriger la non-linéarité du disque image obtenu afin de présenter à l'observateur une image dépourvue de déformation optique.

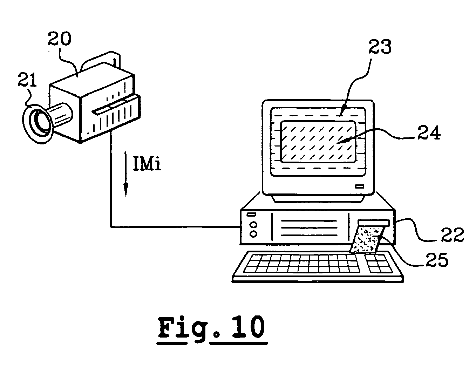

Ce deuxième aspect de l'invention est mis en oeuvre au stade du traitement par ordinateur de l'image initiale, pour la présentation d'une image panoramique interactive sur un écran. Les moyens de mise en oeuvre du procédé de l'invention sont illustrés en figure 10 et sont en soi classiques. On distingue un appareil de prise de vue numérique 20 équipé d'un objectif panoramique non linéaire 21 et connecté à un micro-ordinateur 22 comprenant un écran 23. Les images numériques IMi prises au moyen de l'appareil 20 sont transférées au micro-ordinateur pour être traitées et affichées sur l'écran 23, dans une fenêtre d'affichage 24. Un programme de traitement comprenant un algorithme de transformation et d'affichage des images est préalablement chargé dans le micro-ordinateur, par exemple au moyen d'un CD-ROM 25 ou par téléchargement via le réseau Internet. L'appareil 20 peut être un appareil photographique numérique ou une caméra vidéo numérique et la connexion au micro-ordinateur peu être permanente ou non. Dans le cas d'une caméra vidéo, le micro-ordinateur reçoit un flux d'images qu'il traite en temps réel pour les afficher sur l'écran.

Dans ce contexte, le procédé de correction selon l'invention peut être exécuté selon deux modes de réalisation. Un premier mode de réalisation consiste à effectuer une correction de l'image initiale au moyen d'une fonction $Fd^{-1}$ qui est la fonction réciproque de la fonction de répartition Fd selon l'invention. La fonction de répartition Fd étant connue et déterminée au moment de la conception de l'objectif non linéaire, il est aisé d'en déduire la fonction réciproque $Fd^{-1}$. Cette étape de correction permet d'obtenir une image corrigée dans laquelle les non linéarités dues à l'objectif selon l'invention sont supprimées. L'image corrigée est équivalente à une image prise au moyen d'un objectif panoramique classique et peut ensuite être traitée par tout logiciel d'affichage classique disponible dans le commerce, prévu pour transférer les points image d'un disque image dans un espace à trois dimensions et pour procéder à l'affichage interactif d'un secteur de l'image obtenue.

La seconde variante du procédé consiste à faire intervenir la fonction de répartition Fd dans un algorithme d'affichage d'image travaillant à rebours, c'est-à-dire définissant en temps réel la couleur des pixels d'une fenêtre d'affichage à partir des points image du disque image.

Premier mode de réalisation du procédé de correction

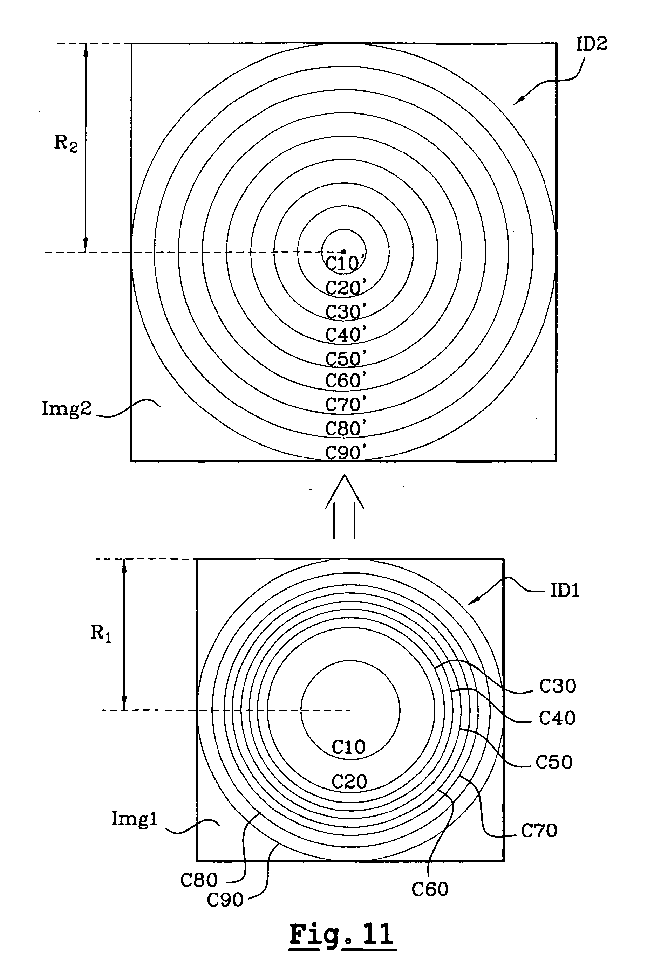

La figure 11 illustre le premier mode de réalisation du procédé selon l'invention. On suppose ici que l'on dispose d'une image initiale Img1 comportant un disque image non linéaire ID1 de rayon R1, ayant par exemple une zone de dilatation au centre (cercles C10 et C20). On transforme l'image initiale Img1 en une image corrigée Img2 comportant un disque image linéaire ID2 de rayon R2. Le rayon R2 du disque image ID2 est supérieur au rayon R1 du disque image initial ID1 et le disque image ID2 présente une résolution égale ou sensiblement égale à la résolution offerte par la zone du disque image Img1 où se trouve la plus grande densité d'information (soit la zone où l'image est la plus dilatée). Il s'agit ici de la partie centrale de l'image délimitée par le cercle C20.

Les principales étapes de ce procédé sont les suivantes :

- on calcule dans un premier temps, au moyen de la fonction réciproque $Fd^{-1}$, la taille R2 du disque image linéarisé ID2 en considérant sur le disque image initial ID1 l'endroit où l'image est la plus dilatée, de manière que l'image corrigée Img2 ait une résolution égale ou sensiblement égale à la résolution offerte par la zone de l'image Img1 où se trouve la plus grande densité d'information,
- on parcourt ensuite chaque pixel de l'image à calculer Img2, et on cherche la position de son point jumeau sur l'image Img1, puis
- on affecte au point de la nouvelle image Img2 la couleur du point correspondant sur l'image initiale Img1.

Ce procédé est mis en oeuvre au moyen d'un algorithme décrit ci-après (algorithme 1), dans lequel :

- A est l'angle d'ouverture de l'objectif,
- D est la distance d'un point image relativement au centre du disque image initial ID1,
- R1 est la taille en pixels du rayon du disque image initial ID1 (soit le nombre de pixels entre le centre et le bord du disque image) et
- R2 est la taille en pixels du rayon du disque image linéarisé ID2,
- I et J sont les coordonnées d'un point image dans l'image d'arrivée, le point de coordonnées (0,0) étant au centre de l'image,

- U et V sont les coordonnées d'un point jumeau dans l'image de départ, le point de coordonnées (0,0) étant au centre de l'image,
- "Angle courant" et "Angle_précédent" sont des paramètres itératifs,
- DAM est la différence angulaire minimale entre deux points objets correspondants à deux points image adjacents sur le disque image initial ID1 (soit la résolution maximale du disque image ID1 exprimée en différence d'angle),
- Fdlin$^{-1}$ est la fonction réciproque d'une fonction de répartition d'un objectif linéaire classique, du type : Fdlin($\alpha$)=K$\alpha$, avec K=2/A, soit K=1/90 avec un objectif ayant un angle d'ouverture de 180°.

Algorithme 1

```
[recherche de DAM]
1/ DAM = A/2
2/ Angle_courant = 0
3/ Pour D = 1 à R1 [avec des incréments de 1]
4/    Angle_précédent = Angle_courant
5/    Angle_courant = Fd⁻¹(D/R1)
6/    Si DAM > (Angle_courant - Angle_précédent) alors
7/         DAM = (Angle_courant - Angle_précédent)
8/    Fin si
9/ Fin pour
[détermination du rayon R2 du disque ID2]
```

```
10/ R2 = (A/2)/DAM
[calcul de la nouvelle image]
[parcours de chaque pixel de l'image à calculer Img2]
11/ Pour I =-R2 à +R2 [avec un incrément de 1]
12/  Pour J =-R2 à +R2 [avec un incrément de 1]
[recherche des coordonnées polaires (R',θ) du point jumeau
sur l'image Img1 à partir des coordonnées (R,θ) du point de
l'image Img2]
13/       R = √(I²+J²)
14/       Si R < R2 alors
15/            Si J < 0 alors
16/                 θ = arc cosinus(I/R)
17/            Sinon
18/                 θ = -arc cosinus(I/R)
19/            Fin si
[conversion du rayon R pour trouver le rayon R']
20/            R'= R1*Fd(Fdlin⁻¹ (R/R2))
comme Fdlin⁻¹(R) = R/K et que K=2/A, il vient que :
20'/            R'= R1*Fd((R/R2) * (A/2))
[retour aux coordonnées cartésiennes ]
21/            U = R'*cos(θ)
22/            V = R'*sin(θ)
[affectation de la couleur du point]
23/            Img2[I,J] = Img1[U,V]
24/       Sinon
[attribution de la couleur noire aux points en dehors du
disque image]
25/            Img2[I,J] = Noir
26/       Fin si
27/  Fin pour
28/ Fin pour
```

On notera que l'étape 14 permet d'éviter de calculer tous les points situés en dehors du disque image (on se trouve à l'extérieur du disque image quand R > R2). D'autre part, l'algorithme 1 peut être amélioré en effectuant a posteriori une interpolation bilinéaire sur l'image Img2, en soi bien connue de l'homme de l'art, afin de lisser l'image finale.

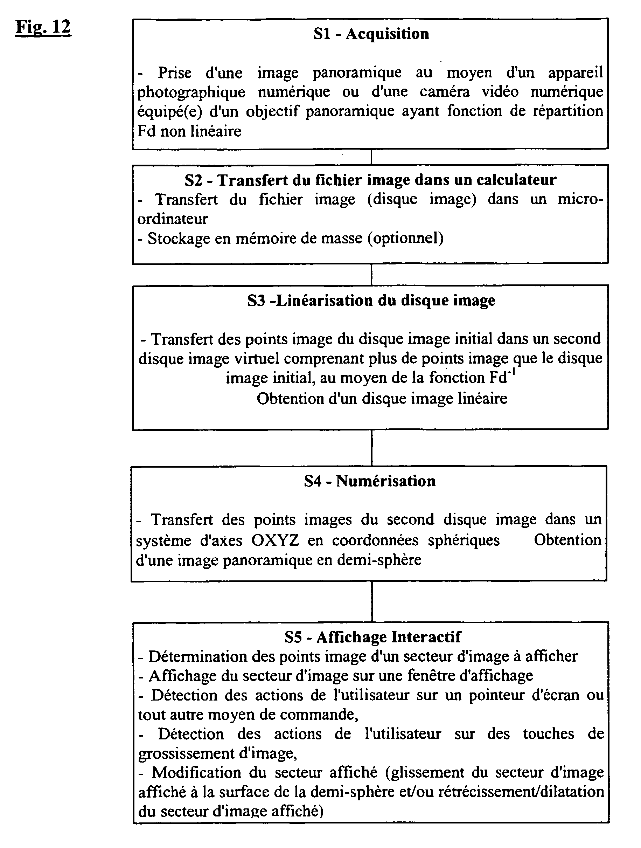

La figure 12 est un organigramme donnant un aperçu général des étapes d'un procédé de capture et de présentation interactive d'une image panoramique sur un écran. Cet organigramme est décrit par le tableau 1 figurant en Annexe, faisant partie intégrante de la description. Les étapes S1 et S2, respectivement d'acquisition de l'image et de transfert de l'image dans un calculateur, sont en soi classiques. L'étape de linéarisation du disque image S3 est exécutée conformément au procédé de l'invention, par exemple au moyen de l'algorithme décrit ci-dessus. L'étape S4, dite de "numérisation", est également classique. Cette étape consiste à transférer les points image du disque image corrigé Img2 dans un espace à trois dimensions d'axes Oxyz dans lequel les points image sont par exemple référencés en coordonnées sphériques. L'étape S5 est également classique, et consiste à afficher sur un écran un secteur de l'image à trois dimensions appelé fenêtre d'affichage. La fenêtre d'affichage est déplacée vers le haut ou vers le bas en fonction des actions de l'utilisateur, ou fait l'objet d'un grossissement sur demande de l'utilisateur. Lors d'un grossissement, on bénéficie d'une meilleure définition que dans l'art antérieur dans les zones correspondant aux parties dilatées de l'image initiale.

Second mode de réalisation du procédé de correction

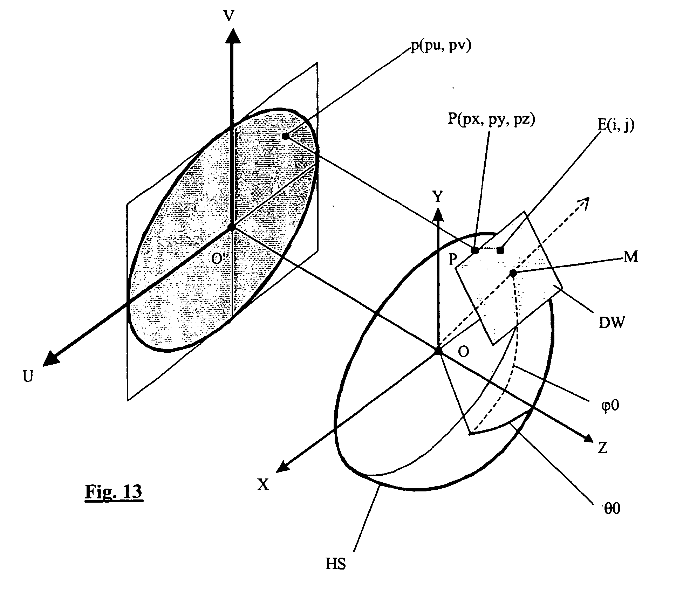

Le deuxième mode de réalisation du procédé de correction selon l'invention est illustré en figure 13. De façon schématique, ce procédé consiste à projeter sur le disque image ID1 de l'image initiale Img1 les points image d'un secteur d'image correspondant à une fenêtre d'affichage DW. Ce procédé ne nécessite pas le calcul d'un disque image corrigé, contrairement au mode de réalisation précédent.

Les points image de la fenêtre d'affichage DW sont référencés E(i,j) dans le repère de la fenêtre d'affichage, exprimé en coordonnées de lignes i et en coordonnées de colonnes j. Les points E(i,j) sont tout d'abord projetés sur une portion de sphère HS de centre O et d'axes OX, OY, OZ, pour obtenir des points image P(px, py, pz) appartenant à la portion de sphère. Cette portion de sphère couvre un angle solide qui correspond à l'ouverture de l'objectif utilisé. On a considéré jusqu'à présent l'exemple d'un objectif panoramique ayant une ouverture de 180° et la portion de sphère HS considérée ici est donc une demi-sphère. Les points image P ainsi déterminés sont ensuite projetés sur le disque image Img1 au moyen de la fonction de répartition non linéaire Fd selon l'invention, ce qui nécessite le calcul préalable de l'angle de champ $\alpha$ des points P par rapport au centre o de la semi-sphère. Le centre O de la demi-sphère'est l'équivalent virtuel du centre "p" du panorama, ayant servi de référence, dans ce qui précède, pour déterminer les angles d'incidence $\alpha$ des points objet et l'allure de la fonction Fd. La projection des points image P sur le disque image ID1 permet d'obtenir des points image p(pu, pv) sur le disque image, dans un repère de centre O' (correspondant au centre du disque image) et d'axes O'U et O'V. L'axe OZ dans le référentiel de la demi-sphère HS est perpendiculaire au plan du disque image ID1 et passe par le centre O' du disque image, de sorte que les axes O'Z et OZ sont confondus.

Comme cela apparaîtra clairement à l'homme de l'art, la correction de la non-linéarité du disque image est implicite ici puisque l'on va "chercher" sur le disque image ID1, au moyen de la fonction Fd, les points image p(pu, pv) correspondant aux points image E(i, j) de la fenêtre d'affichage DW.

Le procédé selon l'invention est mis en oeuvre au moyen d'un algorithme décrit ci-après (algorithme 2), dans lequel :

- i et j sont les coordonnées d'un point E(i, j) de la fenêtre d'affichage,
- Imax et Jmax sont le nombre de colonnes et le nombre de lignes de la fenêtre d'affichage, correspondant aux dimensions en nombre de pixels de la fenêtre d'affichage
- Ex, Ey et Ez sont les coordonnées cartésiennes dans le repère OXYZ d'un point E(i,j) de la fenêtre d'affichage DW,
- Px, Py et Pz sont les coordonnées cartésiennes d'un point P sur la demi-sphère HS,
- pu et pv sont les coordonnées cartésiennes d'un point image p dans le repère O'UV du disque image,
- L est la taille du disque image, en nombre de pixels,
- M est le centre de la fenêtre d'affichage DW,
- la "direction regard" est la direction matérialisée par le point O et le centre de la fenêtre d'affichage M, la fenêtre d'affichage formant la base d'une pyramide de vision de l'observateur dont le sommet est le point O (position de l'observateur),
- $\theta 0$ et $\varphi 0$ sont les longitudes et latitudes correspondant à la direction du regard depuis le point O vers le centre M de la fenêtre d'affichage,
- Pixel Ecran[i,j] est la couleur (RVBA) d'un point E (i,j) de la fenêtre d'affichage DW,
- Pixel_Image[i,j] est la couleur du point P(i,j) de la demi-sphère HS correspondant au disque image, le point de coordonnées (0,0) étant situé au centre du disque image,
- R est le rayon de la demi-sphère HS (valeur arbitraire choisie de manière à améliorer la précision des calculs, R est par exemple choisi égal à 10000),
- $\alpha$ est l'angle par rapport au centre O d'un point image "P situé sur la demi-sphère (représente l'angle de champ au moment de la prise de vue du point objet correspondant), et
- aux1, aux2 sont des variables intermédiaires,
- "Zoom" est une variable définissant le grossissement, ayant une valeur par défaut égale à R.
- "$\sqrt{}$" est la fonction racine carrée.

Algorithme 2

```
1/ Pour i=-Imax/2 à i=Imax/2 faire [par incréments de 1]
2/    Pour j=-Jmax/2 à j=Jmax/2 faire [par incréments de 1]
[calcul des coordonnées cartésiennes Ex, Ey, Ez du point E de
la fenêtre d'affichage dans le système OXYZ]
3/        Ey = j*cos(φ0) - Zoom*sin(φ0)
4/        Ez = Zoom*cos(φ0) + j*sin(φ0)
5/        aux1 = Ez
6/        Ez = Ez*cos(θ0) - i*sin(θ0)
7/        Ex = i*cos(θ0) + aux1*sin(θ0)


[calcul des coordonnées du point P correspondant au point E]
8/        aux2 = R/√(Ex*Ex + Ey*Ey + Ez*Ez)
9/        Px = Ex*aux2
10/       Py = Ey*aux2
11/       Pz = Ez*aux2
[calcul des coordonnées du point p correspondant au point P,
dans le repère (O'UV), au moyen de la fonction Fd]
12/       X = Px/R
13/       Y = Py/R
14/       r = √(X*X + Y*Y)
15/       α = arcsinus(r)
16/       U = X/r
17/       V = Y/r
18/       pu = L*U*Fd(α)
19/       pv = L*V*Fd(α)
20/       Pixel_Ecran[i,j] = Pixel_Image[pu,pv]
21/   fin pour
22/ fin pour
```

Une demande de grossissement (zoom) par l'utilisateur conduit l'algorithme à modifier le paramètre "Zoom". Lorsque le paramètre "Zoom" est égal au rayon R de la demi-sphère, la fenêtre d'affichage DW est tangentielle à la demi-sphère (figure 13). Lorsque le paramètre "Zoom" est supérieur à R, la fenêtre DW s'éloigne de la demi-sphère (en suivant l'axe donné par la position du regard OM), ce qui correspond à un rétrécissement de la pyramide de vision et un grossissement du secteur d'image présenté dans la fenêtre DW. Le grossissement du secteur d'image présenté à l'observateur est donc égal au rapport du paramètre "Zoom" par le rayon R.

Lorsque les étapes 18 et 19 sont effectuées avec un paramètre "Zoom" supérieur à R, on gagne en définition dans les zones où l'image a été dilatée lors de la prise de vue car il existe toujours, tant que la limite de résolution n'est pas atteinte, deux pixels adjacents sur le disque image qui correspondent à deux pixels adjacents de la fenêtre d'affichage. Dans les zones comprimées de l'image, la recherche du pixel le plus proche au moyen des relations $L*U*Fd(\alpha)$ et $L*V*Fd(\alpha)$ conduit au contraire l'algorithme à trouver sur le disque image le même pixel image pour plusieurs pixels adjacents de la fenêtre d'affichage. Toutefois ces zones d'image comprimées bénéficiant d'une moindre définition sur le disque image, sont considérées comme secondaires pour l'application visée, conformément au postulat sur lequel se fonde la présente invention.

De façon générale, toute autre méthode de projection est susceptible d'être utilisée, l'étape essentielle selon l'invention étant de retrouver l'angle de champ $\alpha$ des points objet sur la demi-sphère, par rapport au centre de la demi-sphère, afin de faire intervenir dans les calculs la fonction de répartition Fd.

L'algorithme 2 est bien entendu applicable lorsque l'on dispose de deux disques image complémentaires, l'un correspondant à une photographie avant et l'autre à une photographie arrière d'un panorama à 360°, la deuxième photographie étant prise en faisant pivoter l'objectif panoramique de 180° autour d'un axe passant par le centre du panorama. On définit dans ce cas deux demi-sphères et deux points image appelés "Pixel_Image_Devant" et "Pixel_Image_Derriere" :

- Pixel_Image_Devant[i,j] : couleur d'un point E(i,j) sur la demi-sphère correspondant à la photo avant, le point de coordonnées (0,0), étant situé au centre du disque image,
- Pixel_Image Derriere[i,j] : couleur d'un point E(i,j) sur la demi-sphère correspondant à la photo arrière, le point de coordonnées (0,0) étant situé au centre du disque image.

Les étapes 18 et suivantes de l'algorithme 2 sont alors modifiées ainsi :

```
18/ pu = L*U*Fd(α)
19/ pv = L*V*Fd(α)
20/ Si Pz >= 0 alors
21/ Pixel_Ecran[i,j] = Pixel_Image_Devant[pu,pv]
22/ Sinon Pixel_Ecran[i,j] = Pixel_Image_Derriere[L-pu,pv] 23/ Fin si
24 / fin pour
25/ fin pour
```

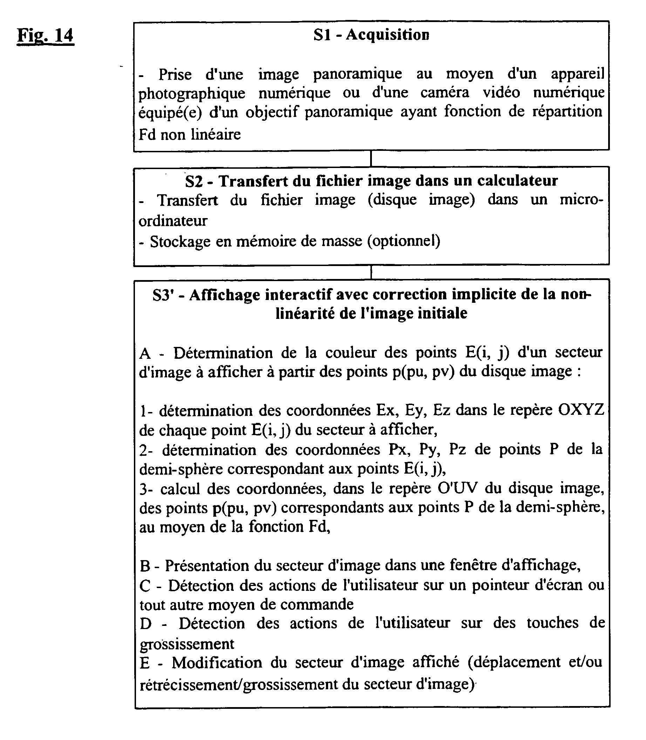

La figure 14 est un organigramme donnant un aperçu général des étapes d'un procédé de capture et de présentation interactive d'une image panoramique sur un écran. Cet organigramme est décrit par le tableau 2 figurant en Annexe, faisant partie intégrante de la description. On y retrouve les étapes d'acquisition S1 et de transfert S2 décrites plus haut. L'étape S2 est suivie d'une étape d'affichage interactif S3' faite conformément au procédé qui vient d'être décrit, incorporant implicitement une correction des nonlinéarités du disque image grâce à l'utilisation de la fonction de répartition Fd pour retrouver sur le disque image les points correspondants aux pixels de la fenêtre d'affichage.

**II - Exemples de réalisation d'un objectif panoramique non linéaire**

Un objectif de la présente invention est ici de prévoir un objectif panoramique présentant une fonction de répartition Fd non linéaire, qui soit d'une structure simple et d'un faible prix de revient. On décrira dans ce qui suit deux exemples de réalisation d'objectifs panoramiques non linéaires, le premier étant un objectif de type direct et le second de type indirect, c'est-à-dire utilisant des miroirs.

**Premier mode de réalisation**

Les apodiseurs sont des systèmes optiques bien connus de l'homme de l'art, utilisés pour modifier la répartition énergétique (quantité de lumière) au niveau de la pupille d'une source de lumière. Ils sont notamment utilisés pour uniformiser l'énergie dans un faisceau laser ou encore, dans le domaine de la photographie, pour limiter la diffraction de la lumière à travers les lentilles. Il est également connu d'utiliser un apodiseur en tant que filtre, pour couvrir l'ouverture d'un instrument optique afin de supprimer les anneaux secondaires d'une figure de diffraction. Lorsque l'on veut séparer les images de deux sources ponctuelles voisines, ces anneaux secondaires sont gênants et réduisent la résolution. On peut alors "apodiser", c'est-à-dire supprimer ces anneaux secondaires en plaçant un filtre adéquat dans le plan de la pupille.

Ici, l'idée de l'invention est d'utiliser un apodiseur dans un but différent : le principe de l'apodiseur est utilisé pour contrôler la répartition angulaire d'un objectif panoramique et obtenir la non-linéarité recherchée.

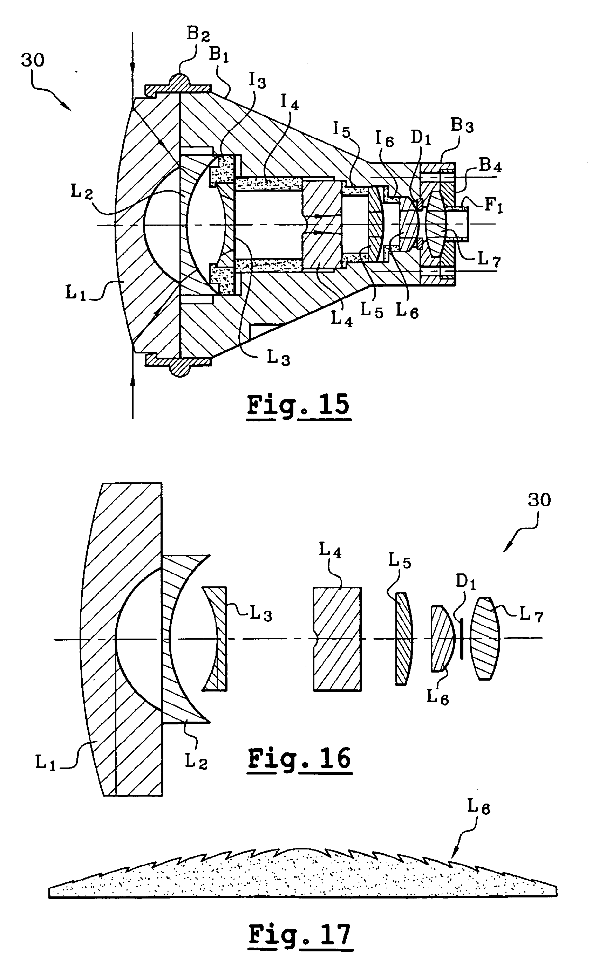

La figure 15 représente par une vue en coupe un exemple de réalisation d'un objectif non linéaire 30. La fonction de répartition Fd obtenue au moyen de l'objectif 30 est la fonction Fd1 décrite plus haut en relation avec la figure 7B, l'objectif 30 assurant ainsi une dilation de l'image au centre.

L'objectif 30 comprend un système de lentilles qui est également représenté en figure 16 par une vue éclatée. On distingue un groupe optique divergent formé par des lentilles L1, L2, L3, un groupe optique convergent formé par des lentilles L4, L5, L6, L7, un diaphragme D1 étant agencé entre les lentilles L6 et L7.

Des pièces B1 à B4 et des pièces I3 à I6 sont prévues pour maintenir les lentilles. La pièce B1 forme le corps de l'objectif et comprend une cavité cylindrique dans laquelle sont agencées les lentilles L2 à L6. La pièce B2 est vissée sur le corps B1 et permet de fixer la lentille frontale L1 contre la face avant de la pièce B1, la face arrière de la lentille L1 étant au contact de la face avant de la lentille L2. Les pièces B3 et B4 sont fixées par des vis (non représentées) contre la partie arrière du corps B1. La pièce B3 maintient le diaphragme D1 et comprend une cavité de réception de la lentille arrière L7. La pièce B4 plaque la lentille L7 dans la pièce B3 et comporte un manchon arrière F1 pourvu d'un filetage permettant de fixer un capteur d'image, par exemple un capteur CCD. Les pièces I3 à I6 sont des intercalaires permettant d'ajuster avec précision les distances entre les lentilles L2 à L6 à l'intérieur du corps B1.

Le groupe optique divergent L1, L2, L3 définit l'angle de champ de l'objectif 30, ici de 180°. La lentille frontale L1 est un ménisque divergent en PMMA à face avant asphérique et face arrière concave. Rappelons que le PMMA ou polyméthacrylate est un verre organique à faible prix de revient, appartenant à la catégorie des matières plastiques. La lentille L2 est de type plan-concave et est en borosilicate BK7 (verre minéral optique standard). Sa face avant (face plane) est plaquée contre une partie plate de la face arrière de la lentille L1, qui s'étend à la périphérie de la partie concave (partie utile) de la face arrière de la lentille L1. La lentille L3 est également de type plan-concave et est en BK7. Sa face concave est orientée vers l'avant, en regard de la face arrière de la lentille L2.

Le groupe optique convergent L4, L5, L6, L7 forme un apodiseur au sens de la présente invention et détermine la fonction de répartition Fd non linéaire, qui est obtenue ici au moyen de lentilles asphériques et d'une lentille diffractive.

La lentille L4 est de type plan-concave et est en PMMA. Sa face avant concave est asphérique. La lentille L5 est de type plan-convexe et est en BK7, sa face plane étant orientée vers l'avant. La lentille L6 est un ménisque en PMMA ayant une face avant concave et asphérique et une face arrière convexe diffractive. Cette face arrière diffractive présente un réseau de diffraction constitué de zones diffractives circulaires centrées sur l'axe optique de la lentille, dont le profil est représenté en figure 17. Enfin, la lentille arrière L7 est de type biconvexe et est en BK7. Elle focalise le flux lumineux sur le plan image, à l'emplacement prévu pour le capteur d'image.

Les faces avant asphériques des lentilles L1, L4 et L6 sont déterminées au moyen d'une formule du type :

$$z(r) = [(C*r^2)/(1 + \sqrt{(1-(1+k)*C^2*r^2)}] + A_1r^2 + A_2r^4 + A_3r^6 + A_4r^8 + A_5r^{10}$$

dans laquelle :

"k" est une constante de conicité,
"A1", "A2", "A3", "A4", "A5" sont des constantes d'ajustement du coefficient de conicité en fonction de la position,
"z" est la forme de la surface,
"r" est le rayon au centre, et
"C" est le rayon de courbure.

La face arrière diffractive de la lentille L6 permet de réduire le nombre de lentilles nécessaire à la réalisation de l'objectif 30. Dans le présent mode de réalisation, elle permet par exemple d'éviter la prévision d'au moins trois lentilles complexes supplémentaires. Elle est déterminée au moyen d'une formule du type :

$$\varphi(r) = \alpha1 \ (r/R0)^2 + \alpha2 \ (r/R0)^4$$

dans laquelle :

"r" est la distance par rapport au centre de la lentille d'un point considéré, se trouvant à la surface de la lentille,
$\alpha1$ et $\alpha2$ sont des constantes définissant le déphasage de la surface d'onde,
"R0" est une constante permettant de normaliser r, et "$\varphi$" est le déphasage introduit par la surface diffractive au point considéré.

Les lentilles en PMMA L1, L4 et L6 sont fabriquées grâce à un procédé dit de "diamond turning" bien connu de l'homme de l'art, qui consiste à fraiser la surface des lentilles en suivant un maillage de points.

L'angle solide de propagation des rayons lumineux dans chaque lentille est repéré sur la figure 15 par des traits noirs. Les rayons lumineux traversent le groupe optique L1, L2, L3, passent à travers l'apodiseur L4, L5, L6, L7 tout en étant diaphragmés par D1.

La détermination des paramètres définissant les faces asphériques mentionnées ci-dessus, la formule du réseau de diffraction de la lentille L6, le calcul des diamètres des lentilles et des distances entre les lentilles, sont à la portée de l'homme de l'art en utilisant les outils classiques de conception de lentille assistée par ordinateur.

Second mode de réalisation

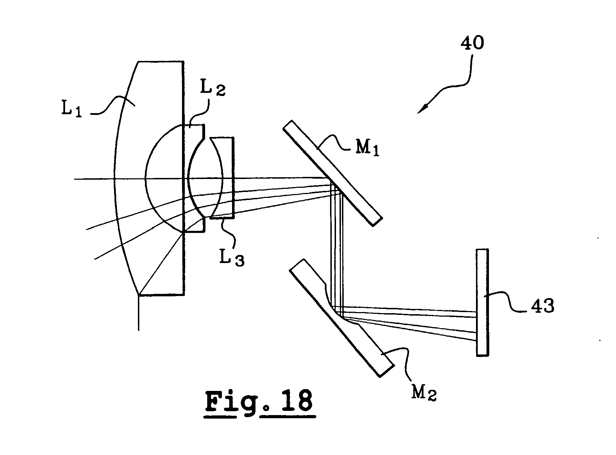

La figure 18 représente schématiquement un objectif 40 non linéaire utilisant un miroir déformant. L'objectif 40 comprend en entrée un groupe optique divergent constitué par exemple par les trois lentilles L1, L2, L3 décrites ci-dessus, définissant l'angle de champ de l'objectif. En regard du groupe optique se trouve un miroir plan M1 qui renvoie le faisceau lumineux sur un miroir déformant M2 de forme concave asphérique. Le faisceau réfléchi par le miroir M2 est envoyé sur un capteur d'image 43.

Dans un tel mode de réalisation, les irrégularités de sphéricité que présente la partie concave du miroir déterminent la fonction de répartition angulaire Fd recherchée pour l'application visée (déformation au centre, sur les bords...). Le résultat obtenu est équivalent à celui du système optique décrit plus haut. L'obtention de la fonction de répartition Fd est à la portée de l'homme de l'art grâce aux outils de conception de lentilles assistée par ordinateur qui permettent, outre la conception de lentilles, la conception et la mise au point de surfaces réfléchissantes.

Une variante de ce mode de réalisation consiste à prévoir plusieurs miroirs déformants afin de combiner des déformations ou de simplifier des déformations complexes en caractérisant un type de déformation par miroir, ce qui présente l'avantage de faciliter les travaux d'ingénierie.

Encore une autre variante consiste à utiliser un ou plusieurs miroirs déformables pour réaliser un système optique dit "adaptatif". Les miroirs déformables comprennent une couche de micro-pistons piézoélectriques couverte par une couche réfléchissante. Chaque piston piézoélectrique est activé individuellement, de sorte que l'on contrôle les déformations du miroir en plusieurs points afin d'obtenir la forme désirée. Un tel dispositif peut être piloté par un circuit intégré comprenant dans sa mémoire plusieurs configurations des micro-pistons, afin d'obtenir une fonction de répartition Fd ajustable en fonction de l'utilisation visée, ce qui évite de prévoir plusieurs objectifs.

De façon générale, les optiques adaptatives sont en soi connues de l'homme de l'art et utilisées dans les télescopes de haute précision afin de corriger les défauts optiques des lentilles ou des déformations atmosphériques. Les miroirs déformables existent également dans le domaine des disques optiques, si l'on se réfère par exemple aux brevets US 5 880 896 et US 57 45 278.

Ainsi, ici également, on utilise des moyens en soi connus à des fins différentes, non pas pour corriger une lentille mais pour obtenir au contraire une fonction de répartition angulaire non linéaire.

La présente invention est bien entendu susceptible de diverses autres variantes de réalisation. Notamment, bien que l'on ait décrit dans ce qui précède des objectifs panoramiques non linéaires à symétrie axiale relativement à l'axe optique, dans lesquels la position d'un point image est uniquement fonction de l'angle de champ relativement à cet axe du point objet correspondant (ce qui donne une distribution de points en cercles concentriques, comme vu plus haut), il entre dans le cadre de la présente invention de prévoir des objectifs dont la non-linéarité n'est pas symétrique relativement à l'axe optique, de sorte que les parties dilatées de l'image peuvent, dans ce cas, n'être pas calées sur le centre de l'image.

**ANNEXE (faisant partie intégrante de la description)**

**Tableau 1**

| **S1 - Acquisition** |
|---|
| - Prise d'une image panoramique au moyen d'un appareil photographique numérique ou d'une caméra vidéo numérique équipé(e) d'un objectif panoramique ayant fonction de répartition Fd non linéaire |
| **S2 - Transfert du fichier image dans un calculateur** |
| - Transfert du fichier image (disque image) dans un micro-ordinateur<br>- Stockage en mémoire de masse (optionnel) |
| **S3 -Linéarisation du disque image** |
| - Transfert des points image du disque image initial dans un second disque image virtuel comprenant plus de points image que le disque image initial, au moyen de la fonction Fd$^{-1}$<br>=> Obtention d'un disque image linéaire |

(suite)

| S4 - Numérisation |
| --- |
| - Transfert des points image du second disque image dans un système d'axes OXYZ en coordonnées sphériques => Obtention d'une image panoramique en demi-sphère |

| S5 - Affichage Interactif |
| --- |
| - Détermination des points image d'un secteur d'image à afficher |
| - Affichage du secteur d'image sur une fenêtre d'affichage |
| - Détection des actions de l'utilisateur sur un pointeur d'écran ou tout autre moyen de commande, |
| - Détection des actions de l'utilisateur sur des touches de grossissement d'image, |
| - Modification du secteur affiché (glissement du secteur d'image affiché à la surface de la demi-sphère et/ou rétrécissement/dilatation du secteur d'image affiché) |

**Tableau 2**

| S1 - Acquisition |
| --- |
| - Prise d'une image panoramique au moyen d'un appareil photographique numérique ou d'une caméra vidéo numérique équipé(e) d'un objectif panoramique ayant fonction de répartition Fd non linéaire |

| S2 - Transfert du fichier image dans un calculateur |
| --- |
| - Transfert du fichier image (disque image) dans un micro-ordinateur |
| - Stockage en mémoire de masse (optionnel) |

| S3' - Affichage interactif avec correction implicite de la non-linéarité de l'image initiale |
| --- |
| A - Détermination de la couleur des points E(i, j) d'un secteur d'image à afficher à partir des points p (pu, pv) du disque image : |
| 1 - détermination des coordonnées Ex, Ey, Ez dans le repère OXYZ de chaque point E(i, j) du secteur à afficher, |
| 2 - détermination des coordonnées Px, Py, Pz de points P de la demi-sphère correspondant aux points E(i, j), |
| 3 - calcul des coordonnées, dans le repère O'UV du disque image, de points p (pu, pv) correspondants aux points P de la demi-sphère, au moyen de la fonction Fd, |
| B - Présentation du secteur d'image dans une fenêtre d'affichage, |
| C - Détection des actions de l'utilisateur sur un pointeur d'écran ou tout autre moyen de commande |
| D - Détection des actions de l'utilisateur sur des touches de grossissement |
| E - Modification du secteur d'image affiché (déplacement et/ou rétrécissement/grossissement du secteur d'image) |

## Revendications

**1.** Procédé de capture d'une image panoramique numérique, par projection d'un panorama (PM) sur un capteur d'image (17) au moyen d'un objectif panoramique, dans lequel l'objectif panoramique (18, 30, 40) présente une fonction (Fd, Fd1, Fd2, Fd3) de répartition de points image (a"-d") qui n'est pas linéaire relativement à l'angle de champ de points objet (a-d) du panorama, **caractérisé en ce que** la fonction de répartition présente une divergence maximale d'au moins $\pm 10\%$ par rapport à une fonction de répartition linéaire (Fdc), et est configurée de telle sorte que l'image panoramique obtenue présente une zone (C30-C70) intermédiaire se trouvant entre le centre et le bord de l'image qui est sensiblement dilatée et deux zones (O-C30, C70-C90) se trouvant respectivement au centre de l'image et au bord de l'image qui sont sensiblement comprimées.

**2.** Procédé selon la revendication 1, dans lequel l'objectif présente une fonction de répartition non linéaire qui est symétrique relativement à l'axe optique de l'objectif, la position d'un point image relativement au centre de l'image étant fonction de l'angle de champ du point objet correspondant.

**3.** Procédé selon l'une des revendications 1 et 2, dans lequel l'objectif (30) comprend un jeu de lentilles (L4-L7) formant apodiseur.

**4.** Procédé selon la revendication 3, dans lequel le jeu de lentilles formant apodiseur comprend au moins une lentille asphérique (L4, L6).

**5.** Procédé selon la revendication 4, dans lequel le jeu de lentilles formant apodiseur comprend au moins une lentille diffractive (L6).

**6.** Procédé selon l'une des revendications 1 à 5, dans lequel l'objectif (40) comprend un jeu de miroirs (M1, M2) comprenant au moins un miroir déformant (M2).

**7.** Procédé d'affichage d'une image panoramique initiale (Img1) obtenue conformément au procédé selon l'une des revendications 1 à 6, **caractérisé en ce qu'**il comprend une étape (S3, S3') de correction de la non-linéarité de l'image initiale, faite au moyen d'une fonction (Fd$^{-1}$) réciproque de la fonction (Fd) de répartition non linéaire de l'objectif ou au moyen de la fonction (Fd) de répartition non linéaire.

**8.** Procédé selon la revendication 7, dans lequel l'étape de correction (S3) comprend une étape de transformation de l'image initiale (Img1) en une image numérique corrigée (Img1) comprenant un nombre de points image supérieur au nombre de pixels que comprend le capteur d'image (17).

**9.** Procédé selon la revendication 8, comprenant :

- une étape de calcul, au moyen de la fonction réciproque de la fonction de répartition, de la taille (R2) de l'image corrigée, de manière que l'image corrigée ait une résolution équivalente à la zone la plus dilatée de l'image initiale, et
- une étape consistant à parcourir chaque point image de l'image corrigée, à chercher la position d'un point jumeau du point image sur l'image initiale et à attribuer la couleur du point jumeau au point image de l'image corrigée

**10.** Procédé selon l'une des revendications 8 et 9, dans lequel l'image initiale et l'image corrigée comprennent un disque image (ID1, ID2).

**11.** Procédé selon l'une des revendications 8 à 13, comprenant une étape (S4) de transfert des points image de l'image corrigée dans un espace à trois dimensions et une étape de présentation sur un moyen d'affichage d'un secteur de l'image à trois dimensions obtenue.

**12.** Procédé selon la revendication 7, comprenant une étape (S3') de détermination de la couleur de points image d'une fenêtre d'affichage (DW), par projection des points image de la fenêtre d'affichage sur l'image initiale au moyen de la fonction de répartition non linéaire, et attribution à chaque point image de la fenêtre d'affichage de la couleur d'un point image le plus proche sur l'image initiale.

**13.** Procédé selon la revendication 12, dans lequel la projection des points image de la fenêtre d'affichage sur l'image initiale comprend :

- une étape de projection des points image de la fenêtre d'affichage sur une sphère (HS) ou une portion de sphère,
- une étape de détermination de l'angle ($\alpha$) par rapport au centre (O) de la sphère ou de la portion de sphère de chaque point image projeté, et
- une étape de projection sur l'image initiale de chaque point image projeté sur la sphère ou la portion de sphère, la projection étant faite au moyen de la fonction de répartition non linéaire (Fd) en considérant l'angle de champ ($\alpha$) que présente chaque point à projeter par rapport au centre de la sphère ou de la portion de sphère.

**14.** Objectif panoramique (30, 40) comprenant des moyens optiques pour projeter un panorama dans un plan image de l'objectif, et présentant une fonction (Fd, Fd1, Fd2, Fd3) de répartition de points image (a"-d") qui n'est pas linéaire relativement à l'angle de champ de points objet (a-d) du panorama, la fonction de répartition présentant une divergence maximale d'au moins $\pm 10\%$ par rapport à une fonction de répartition linéaire (Fdc), de telle sorte qu'une image panoramique obtenue au moyen de l'objectif comprend au moins une zone (C10, C20) sensiblement dilatée et au moins une zone (C30-C90) sensiblement comprimée, **caractérisé en ce que** les moyens optiques sont configurés pour dilater une zone intermédiaire de l'image (C30-C70) se trouvant entre le centre et le bord de l'image, et comprimer deux zones (O-C30, C70-C90) de l'image se trouvant respectivement au centre de l'image et au bord de l'image.

**15.** Objectif panoramique selon la revendication 14, présentant une fonction de répartition non linéaire qui est symétrique relativement à l'axe optique de l'objectif, la position d'un point image relativement au centre d'une image obtenue étant fonction de l'angle de champ du point objet correspondant.

**16.** Objectif panoramique selon l'une des revendications 14 et 15, comprenant un jeu de lentilles (L4-L6) formant apodiseur.

**17.** Objectif panoramique selon la revendication 16, dans lequel le jeu de lentilles formant apodiseur comprend au moins une lentille asphérique (L4, L6).

**18.** Objectif panoramique selon l'une des revendications 16 et 17, dans lequel le jeu de lentilles formant apodiseur comprend au moins une lentille diffractive (L6).

**19.** Objectif panoramique selon l'une des revendications 16 à 18, comprenant des lentilles en polyméthacrylate.

**20.** Objectif panoramique selon l'une des revendications 14 et 15, comprenant un jeu de miroirs (M1, M2) comprenant au moins un miroir déformant (M2).

**Claims**

**1.** Method for capturing a digital panoramic image, by projecting a panorama (PM) on an image sensor (17) by means of a panoramic objective, wherein the panoramic objective (18, 30, 40) has a function (Fd, Fd1, Fd2, Fd3) for distributing image points (a"-d") which is non-linear in relation to the field of view of object points (a-d) of the panorama, **characterised in that** the distribution function has a maximum divergence of at least $\pm 10\%$ in relation to a linear distribution function (Fdc), and is configured so that the panoramic image obtained has an intermediate area (C30-C70) located between the centre and the edge of the image which is substantially expanded and two areas (O-C30, C70-C90) respectively located at the centre of the image and at the edge of the image which are substantially compressed.

**2.** Method according to claim 1, wherein the objective has a non linear distribution function which is symmetric in relation to the optical axis of the objective, the position of an image point in relation to the centre of the image being a function of the field of view of the corresponding object point.

**3.** Method according to one of claims 1 and 2, wherein the objective (30) comprises a set of lenses (L4-L7) forming apodizer.

**4.** Method according to claim 3, wherein the set of lenses forming apodizer comprises at least one aspherical lens (L4, L6).

**5.** Method according to claim 4, wherein the set of lenses forming apodizer comprises at least one diffractive lens (L6).

**6.** Method according to one of claims 1 to 5, wherein the objective (40) comprises a set of mirrors (M1, M2) comprising at least one distorting mirror (M2).

**7.** Method for displaying an initial panoramic image (Img1) obtained in accordance with the method according to one of claims 1 to 6, **characterised in that** it comprises a step (S3, S3') of correcting the non-linearity of the initial image, performed by means of a reciprocal function ($Fd^{-1}$) of the non-linear distribution function (Fd) of the objective or by means of the non-linear distribution function (Fd).

**8.** Method according to claim 7, wherein the correction step (S3) comprises a step of transforming the initial image (Img1) into a corrected digital image (Img1) comprising a number of image points higher than the number of pixels that the image sensor (17) comprises.

**9.** Method according to claim 8, comprising:

   - calculating, by means of the reciprocal function of the distribution function, the size (R2) of the corrected image, so that the corrected image has a resolution equivalent to the most expanded area of the initial image, and

- scanning each image point of the corrected image, looking for a twin point of the image point on the initial image and allocating the colour of the twin point to the image point of the corrected image.

10. Method according to one of claims 8 and 9, wherein the initial image and the corrected image comprise an image disk (ID1, ID2).

11. Method according to one of claims 8 to 13, comprising a step (S4) of transferring the image points of the corrected image into a three-dimension space and a step of showing on a display means a sector of the three-dimension image obtained.

12. Method according to claim 7, comprising a step (S3') of determining the colour of image points of a display window (DW), by projecting the image points of the display window onto the initial image by means of the non-linear distribution function, and allocating to each image point of the display window the colour of an image point which is the nearest on the initial image.

13. Method according to claim 12, wherein projecting the image points of the display window onto the initial image comprises:

   - projecting the image points of the display window onto a sphere (HS) or a sphere portion,
   - determining the angle ($\alpha$) in relation to the centre (O) of the sphere or the sphere portion of each image point projected, and
   - projecting onto the initial image each image point projected onto the sphere or sphere portion, projecting being performed by means of the non-linear distribution function (Fd) considering the field of view ($\alpha$) each point to be projected has in relation to the centre of the sphere or the sphere portion.

14. Panoramic objective (30, 40) comprising optical means for projecting a panorama into an image plane of the objective, and having a function (Fd, Fd1, Fd2, Fd3) for distributing image points (a"-d") which is not linear in relation to the field of view of object points (a-d) of the panorama, the distribution function having a maximum divergence of at least $\pm 10\%$ compared to a linear distribution function (Fdc), so that a panoramic image obtained by means of the objective comprises at least one substantially expanded area (C10, C20) and at least one substantially compressed area (C30-C90), **characterised in that** the optical means are configured to expand an intermediate area of the image (C30-C70) located between the centre and the edge of the image, and compress two areas (O-C30, C70-C90) of the image respectively located at the centre of the image and the edge of the image.

15. Panoramic objective according to claim 14, having a non-linear distribution function which is symmetric in relation to the optical axis of the objective, the position of an image point in relation to the centre of an image obtained being a function of the field of view of the corresponding object point.

16. Panoramic objective according to one of claims 14 and 15, comprising a set of lenses (L4-L6) forming apodizer.

17. Panoramic objective according to claim 16, wherein the set of lenses forming apodizer comprises at least one aspherical lens (L4, L6).

18. Panoramic objective according to one of claims 16 and 17, wherein the set of lenses forming apodizer comprises at least one diffractive lens (L6).

19. Panoramic objective according to one of claims 16 to 18, comprising lenses in polymethyl methacrylate.

20. Panoramic objective according to one of claims 14 and 15, comprising a set of mirrors (M1, M2) comprising at least one distorting mirror (M2).

**Patentansprüche**

1. Verfahren zur Erfassung eines digitalen Panoramabildes durch das Projizieren eines Panoramas (PM) auf einen Bildsensor (17) mit Hilfe eines Panorama-Objektivs, in dem das Panorama-Objektiv (18, 30, 40) eine Funktion (Fd, Fd1, Fd2, Fd3) zum Verteilen von Bildpunkten (a"-d") aufweist, die im Verhältnis zum Feldwinkel von Objektpunkten (a-d) des Panoramas nicht linear ist, **dadurch gekennzeichnet, dass** die Verteilungsfunktion eine maximale Di-

vergenz von zumindest $\pm 10\%$ im Verhältnis zu einer linearen Verteilungsfunktion (Fdc) aufweist, und derart gestaltet ist, dass das erhaltene Panoramabild eine Zwischenzone (C30-C70) aufweist, die sich zwischen der Mitte und dem Rand des Bildes, das im Wesentlichen ausgedehnt ist, und zwei Zonen (O-C30, C70-C90), die sich jeweils in der Mitte des Bildes und am Rand des Bildes befinden, die im Wesentlichen komprimiert sind, befindet.

2. Verfahren nach Anspruch 1, in dem das Objektiv eine nichtlineare Verteilungsfunktion aufweist, die symmetrisch im Verhältnis zur optischen Achse des Objektivs ist, wobei die Position eines Bildpunktes im Verhältnis zur Mitte des Bildes vom Feldwinkel des entsprechenden Objektpunktes abhängt.

3. Verfahren nach einem der Ansprüche 1 und 2, in dem das Objektiv (30) einen Satz Linsen (L4-L7), der einen Apodisierer bildet, umfasst.

4. Verfahren nach Anspruch 3, in dem der Satz Linsen, der einen Apodisierer bildet, zumindest eine asphärische Linse (L4, L6) umfasst.

5. Verfahren nach Anspruch 4, in dem der Satz Linsen, der einen Apodisierer bildet, zumindest eine Beugungslinse (L6) umfasst.

6. Verfahren nach einem der Ansprüche 1 bis 5, in dem das Objektiv (40) einen Satz Spiegel (M1, M2), der zumindest einen Zerrspiegel (M2) beinhaltet, umfasst.

7. Verfahren zur Anzeige eines Anfangspanoramabildes (Img1), das gemäß dem Verfahren nach einem der Ansprüche 1 bis 6 erhalten wird, **dadurch gekennzeichnet, dass** es einen Schritt (S3, S3') zur Korrektur der Nicht-Linearität des Anfangsbildes umfasst, die mit Hilfe einer Funktion (Fd$^{-1}$) erfolgt, die reziprok zur nichtlinearen Verteilungsfunktion (Fd) des Objektivs ist, oder mit Hilfe der nichtlinearen Verteilungsfunktion (Fd).

8. Verfahren nach Anspruch 7, in dem der Schritt zur Korrektur (S3) einen Schritt der Umwandlung des Anfangsbildes (Img1) in ein korrigiertes digitales Bild (Img1) umfasst, das eine Anzahl an Bildpunkten umfasst, die größer als die Anzahl an Pixel ist, die der Bildsensor (17) umfasst.

9. Verfahren nach Anspruch 8, das Folgendes umfasst:

   - einen Schritt der Berechnung, mit Hilfe der Funktion, die reziprok zur Verteilungsfunktion ist, der Größe (R2) des korrigierten Bildes, so dass das korrigierte Bild eine Auflösung hat, die der am meisten ausgedehnten Zone des Anfangsbildes entspricht, und
   - einen Schritt, der darin besteht, jeden Bildpunkt des korrigierten Bildes zu überfliegen, die Position eines Zwillingspunktes vom Bildpunkt auf dem Anfangsbild zu suchen und die Farbe des Zwillingspunktes dem Bildpunkt des korrigierten Bildes zuzuordnen.

10. Verfahren nach einem der Ansprüche 8 und 9, in dem das Anfangsbild und das korrigierte Bild eine Bildscheibe (ID1, ID2) umfassen.

11. Verfahren nach einem der Ansprüche 8 bis 13, das einen Schritt (S4) des Transfers der Bildpunkte des korrigierten Bildes in einen dreidimensionalen Raum und einen Schritt der Präsentation auf einem Anzeigemittel von einem Abschnitt des erhaltenen dreidimensionalen Bildes umfasst.

12. Verfahren nach Anspruch 7, das einen Schritt (S3') der Bestimmung der Farbe von Bildpunkten eines Anzeigefensters (DW) umfasst, durch das Projizieren der Bildpunkte des Anzeigefensters auf das Anfangsbild mit Hilfe der nichtlinearen Verteilungsfunktion, und der Zuordnung jedes ttt Bildpunktes des Anzeigefensters der Farbe eines Bildpunktes die auf dem Anfangsbild am nächsten ist.

13. Verfahren nach Anspruch 12, in dem das Projizieren der Bildpunkte des Anzeigefensters auf das Anfangsbild Folgendes umfasst:

   - einen Schritt des Projizierens der Bildpunkte des Anzeigefensters auf eine Kugel (HS) oder einen Kugelabschnitt,
   - einen Schritt der Bestimmung des Winkels ($\alpha$) im Verhältnis zur Mitte (O) der Kugel oder des Kugelabschnitts von jedem projizierten Bildpunkt, und

- einen Schritt des Projizierens auf das Anfangsbild von jedem auf die Kugel oder den Kugelabschnitt projizierten Bildpunkt, wobei das Projizieren mit Hilfe der nichtlinearen Verteilungsfunktion (Fd) unter Berücksichtigung des Feldwinkels ($\alpha$), den jeder zu projizierende Punkt im Verhältnis zur Mitte der Kugel oder des Kugelabschnitts aufweist, erfolgt.

14. Panorama-Objektiv (30, 40), das optische Mittel umfasst, um ein Panorama in eine Bildebene des Objektivs zu projizieren, und das eine Funktion (Fd, Fd1, Fd2, Fd3) zum Verteilen von Bildpunkten (a"-d") aufweist, die nicht linear im Verhältnis zum Feldwinkel von Objektpunkten (a-d) des Panoramas ist, wobei die Verteilungsfunktion derart eine maximale Divergenz von zumindest $\pm 10\%$ im Verhältnis zu einer linearen Verteilungsfunktion (Fdc) aufweist, dass ein mit Hilfe des Objektivs erhaltenes Panoramabild zumindest eine im Wesentlichen ausgedehnte Zone (C10, C20) und zumindest eine im Wesentlichen komprimierte Zone (C30-C90) umfasst, **dadurch gekennzeichnet, dass** die optischen Mittel gestaltet sind, um eine Zwischenzone des Bildes (C30-C70), das sich zwischen der Mitte und dem Rand des Bildes befindet, auszudehnen, und zwei Zonen (O-C30, C70-C90) des Bildes, die sich jeweils in der Mitte des Bildes und am Rand des Bildes befinden, zu komprimieren.

15. Panorama-Objektiv nach Anspruch 14, das eine nichtlineare Verteilungsfunktion aufweist, die symmetrisch im Verhältnis zur optischen Achse des Objektivs ist, wobei die Position eines Bildpunktes im Verhältnis zur Mitte eines erhaltenen Bildes vom Feldwinkel des entsprechenden Objektpunktes abhängt.

16. Panorama-Objektiv nach einem der Ansprüche 14 und 15, das einen Satz Linsen (L4-L6), der einen Apodisierer bildet, umfasst.

17. Panorama-Objektiv nach Anspruch 16, in dem der Satz Linsen, der einen Apodisierer bildet, zumindest eine asphärische Linse (L4, L6) umfasst.

18. Panorama-Objektiv nach einem der Ansprüche 16 und 17, in dem der Satz Linsen, der einen Apodisierer bildet, zumindest eine Beugungslinse (L6) umfasst.

19. Panorama-Objektiv nach einem der Ansprüche 16 bis 18, das Linsen aus Polymethacrylat umfasst.

20. Panorama-Objektiv nach einem der Ansprüche 14 und 15, das einen Satz Spiegel (M1, M2) umfasst, der zumindest einen Zerrspiegel (M2) umfasst.

**Fig. 1**

**Fig. 2**

**Fig. 3**

**Fig. 4A**

**Fig. 4B**

**Fig. 5**

**Fig. 6**

**Fig. 7A**

**Fig. 7B**

**Fig. 8**

**Fig. 9**

**Fig. 10**

**Fig. 11**

**Fig. 12**

---

**S1 - Acquisition**

- Prise d'une image panoramique au moyen d'un appareil photographique numérique ou d'une caméra vidéo numérique équipé(e) d'un objectif panoramique ayant fonction de répartition Fd non linéaire

---

**S2 - Transfert du fichier image dans un calculateur**
- Transfert du fichier image (disque image) dans un micro-ordinateur
- Stockage en mémoire de masse (optionnel)

---

**S3 -Linéarisation du disque image**

- Transfert des points image du disque image initial dans un second disque image virtuel comprenant plus de points image que le disque image initial, au moyen de la fonction $Fd^{-1}$
Obtention d'un disque image linéaire

---

**S4 - Numérisation**

- Transfert des points images du second disque image dans un système d'axes OXYZ en coordonnées sphériques    Obtention d'une image panoramique en demi-sphère

---

**S5 - Affichage Interactif**
- Détermination des points image d'un secteur d'image à afficher
- Affichage du secteur d'image sur une fenêtre d'affichage
- Détection des actions de l'utilisateur sur un pointeur d'écran ou tout autre moyen de commande,
- Détection des actions de l'utilisateur sur des touches de grossissement d'image,
- Modification du secteur affiché (glissement du secteur d'image affiché à la surface de la demi-sphère et/ou rétrécissement/dilatation du secteur d'image affiché)

**Fig. 13**

**Fig. 14**

---

**S1 - Acquisition**

- Prise d'une image panoramique au moyen d'un appareil photographique numérique ou d'une caméra vidéo numérique équipé(e) d'un objectif panoramique ayant fonction de répartition Fd non linéaire

---

**S2 - Transfert du fichier image dans un calculateur**
- Transfert du fichier image (disque image) dans un micro-ordinateur
- Stockage en mémoire de masse (optionnel)

---

**S3' - Affichage interactif avec correction implicite de la non-linéarité de l'image initiale**

A - Détermination de la couleur des points E(i, j) d'un secteur d'image à afficher à partir des points p(pu, pv) du disque image :

1- détermination des coordonnées Ex, Ey, Ez dans le repère OXYZ de chaque point E(i, j) du secteur à afficher,
2- détermination des coordonnées Px, Py, Pz de points P de la demi-sphère correspondant aux points E(i, j),
3- calcul des coordonnées, dans le repère O'UV du disque image, des points p(pu, pv) correspondants aux points P de la demi-sphère, au moyen de la fonction Fd,

B - Présentation du secteur d'image dans une fenêtre d'affichage,
C - Détection des actions de l'utilisateur sur un pointeur d'écran ou tout autre moyen de commande
D - Détection des actions de l'utilisateur sur des touches de grossissement
E - Modification du secteur d'image affiché (déplacement et/ou rétrécissement/grossissement du secteur d'image)

**Fig. 15**

**Fig. 16**

**Fig. 17**

**Fig. 18**

**RÉFÉRENCES CITÉES DANS LA DESCRIPTION**

**Documents brevets cités dans la description**

- US 5710661 A
- EP 0695085 A
- US 3953111 A
- US 5880896 A
- US 5745278 A